# EUROPÄISCHE PATENTSCHRIFT

(11) **EP 4 288 768 B1**
(45) Veröffentlichungstag und Bekanntmachung des Hinweises auf die Patenterteilung: **25.02.2026**
(21) Anmeldenummer: 21844633.4
(22) Anmeldetag: 16.12.2021
(51) Int. Cl.: G01N 23/046, G01N 23/083, G01N 23/18, G06T 7/00, G06V 10/82

(54) **VERFAHREN ZUM PRÜFEN EINES BAUTEILS EINER STRÖMUNGSMASCHINE**
METHOD FOR CHECKING A COMPONENT OF A TURBOMACHINE
PROCÉDÉ POUR CONTRÔLER UN COMPOSANT D'UNE TURBOMACHINE

(30) Priorität: 02.02.2021 DE 102021200938
(43) Veröffentlichungstag der Anmeldung: 13.12.2023
(73) Patentinhaber: MTU Aero Engines AG, 80995 München (DE)
(72) Erfinder: BONHAGE, Marius, 30855 Langenhagen (DE); WEIDLICH, Nils, 30855 Langenhagen (DE); ASCHERMANN, Lars, 30855 Langenhagen (DE); SEIDEL, Frank, 30855 Langenhagen (DE); DÖBBER, Philipp, 30855 Langenhagen (DE); REKER, Dirk Wilhelm, 30855 Langenhagen (DE)
(86) Internationale Anmeldenummer: PCT/DE2021/101011
(87) Internationale Veröffentlichungsnummer: WO 2022/167022

(56) Entgegenhaltungen:
- US-A1- 2005 251 427
- US-A1- 2020 034 958
- US-A1- 2020 349 370

## Beschreibung

### Technisches Gebiet

Die vorliegende Erfindung betrifft ein Verfahren zum Prüfen eines Bauteils einer Strömungsmaschine sowie ein Verfahren zum Trainieren eines maschinellen Lernsystems.

### Stand der Technik

Eine axiale Strömungsmaschine gliedert sich funktional in Verdichter, Brennkammer und Turbine, wobei im Falle eines Flugtriebwerks angesaugte Luft im Verdichter komprimiert und in der nachgelagerten Brennkammer mit hinzugemischtem Kerosin verbrannt wird. Das entstehende Heißgas, eine Mischung aus Verbrennungsgas und Luft, durchströmt die nachgelagerte Turbine und wird dabei expandiert. Die Turbine und der Verdichter sind in der Regel jeweils mehrstufig aufgebaut, wobei eine jeweilige Stufe einen Stator und einen Rotor umfasst. Die Statoren und Rotoren sind dabei jeweils aus einer Mehrzahl umlaufend aufeinanderfolgender Schaufeln aufgebaut, die je nach Anwendung von dem Verdichter- bzw. dem Heißgas umströmt werden.

Bei einem Flugtriebwerk oder einer Kraftwerksturbine kann es im Zuge der Benutzung zu Beschädigungen, wie z.B. Schadstellen, Gefügeveränderungen oder Korrosionserscheinungen an dessen Bauteilen kommen. Besonders gefährdet und sicherheitsrelevant können die im Gaskanal angeordneten Bauteile sein, also bspw. Schaufeln, aber auch Gaskanalplatten etc. Dabei können selbst kleinere Schadstellen insofern problematisch sein, als sie eine Initialstelle für eine Rissausbreitung darstellen können. Deshalb kann der Detektion solcher Schadstellen eine besondere Bedeutung zukommen.

Im Stand der Technik ist es bekannt, dass bei der sogenannten Befundung von Bauteilen wie z.B. Schaufeln von diesen Bildaufnahmen, insbesondere Röntgen- oder CT-Aufnahmen zu erstellt werden. Hierdurch lassen sich zerstörungsfrei Risse oder Geometrieabweichungen an in der Strömungsmaschine betriebenen Bauteilen oder auch Poren oder unzureichende Schweißanbindungen in reparierten Bauteilen erkennen.

Es existieren bereits Softwarelösungen, die anhand vorbestimmter Kriterien wahrscheinliche Fehlstellen markieren und somit den Befunder bei seiner Arbeit unterstützen. Jedoch sind die bekannten Softwarelösungen noch nicht ausreichend zuverlässig, so dass eine manuelle Kontrolle in jedem Fall nötig ist.

Aus der US 2020/0034958 A1 ist eine Verfahren zum Bewerten eines Versicherungsschadens bekannt, bei welchem der Versicherungsnehmer mehrere Aufnahmen des Schadens erstellt und diese einer automatisierten Auswertung unterzogen werden.

Auch aus der US 2020/0349370 A1 ist ein Verfahren zur automatisierten Bewertung von Versicherungsschäden an einem Kfz bekannt, wobei ein Nutzer mit seinem Smartphone verschiedene Fotos von dem Schaden erstellt.

Die US 2005/0251427 A1 richtet sich ebenfalls auf ein automatisiertes Verfahren zur Befundung eines Kfz-Schadens.

### Darstellung der Erfindung

Der vorliegenden Erfindung liegt das technische Problem zugrunde, ein vorteilhaftes Verfahren zum Prüfen eines Bauteils, insbesondere eines Bauteils einer Strömungsmaschine, anzugeben.

Dies wird erfindungsgemäß mit dem Verfahren gemäß Anspruch 1 gelöst. Dabei wird von dem Bauteil zunächst mittels einer Bilderfassungseinrichtung zumindest eine Bildaufnahme, insbesondere eine Lichtbild und/oder eine Röntgen- oder CT-Aufnahme erstellt. In einem weiteren Schritt werden Metadaten zu dem Bauteil akquiriert bzw. bereitgestellt, die bspw. einen Bauteiltyp/Teilenummer, eine Laufzeit des Bauteils, eine berechnete Restlebensdauer, eine vorgeschriebene Restlebensdauer, einen Betreiber der Strömungsmaschine, eine Wandstärke oder eine Reparaturhistorie des Bauteils umfassen. Auf der Grundlage der zumindest einen von der Bilderfassungseinrichtung erstellten ersten Aufnahme und der akquirierten Metadaten wird das untersuchte Bauteil mittels eines maschinellen Lernsystems, bspw. unter Verwendung eines (dazu) trainierten selbstlernenden Algorithmus, der auf einem Computer/Rechner läuft, entweder unter eine "Servicable" oder eine "Non-Servicable" Kategorie klassifiziert. "Servicable" bedeutet in diesem Kontext, dass das Bauteil noch betriebsfähig ist das heißt unter Einhaltung der Zulassungsbedingungen wieder in eine Strömungsmaschine eingebaut werden könnte, während ein als "Non-Servicable" klassifiziertes Bauteil nicht mehr betriebsfähig ist und entweder einer Reparatur bedarf oder Ausschuss darstellt. In anderen Worten sieht die Erfindung ein Verfahren zum Prüfen eines Bauteils mittels eine maschinellen Lernsystems, das zumindest einen Computer oder eine ähnliche Recheneinrichtung mit einem darauf abgelegten trainierten selbstlernenden Algorithmus aufweist, vor. Das maschinelle Lernsystem empfängt zumindest eine Röntgen- oder CT-Aufnahme des Bauteils von einer Bilderfassungseinrichtung und zumindest einen Satz Metadaten zum Bauteil, z.B. aus einer Datenbank, und wertet diese dann mittels des trainierten selbstlernenden Algorithmus aus.

Ein Vorteil hiervon ist, dass das Bauteil schnell, automatisiert und technisch einfach auf Fehlstellen, insbesondere Risse und/oder Poren, untersucht werden kann.

Vorteilhafte Ausgestaltungen der Erfindung sind Gegenstand der Unteransprüche.

Gemäß einem Aspekt der Erfindung kann das maschinelle Lernsystem ferner dazu trainiert sein, die als "Non-Servicable" klassifizierten Teile entweder einer "Repairable" oder einer "Non-Repairable" Kategorie zuzuordnen. Dies ermöglicht schlankere Arbeitsabläufe, da Ausschussteile (Scrap), im Falle dass das maschinelle Lernsystem eine eindeutige Klassifizierung treffen kann, schnell aussortiert werden können.

Gemäß einer bevorzugten Ausgestaltung kann das maschinelle Lernsystem zudem dazu trainiert sein, den als "Repairable" klassifizierten Bauteilen eine Erfolgswahrscheinlichkeit der Reparatur zuzuordnen. Hierzu kann es insbesondere eine Rücckopplung zu den tatsächlich erfolgten Reparaturen an Bauteilen desselben Typs geben, d.h. der Input, ob eine Reparatur gelungen ist, wir in die Metadatenbank des maschinellen Lernsystems zurückgespeist und mit den Prüfdaten, d.h. der Aufnahme aus der Bilderfassungseinrichtung und den anderen Metadaten verknüpft. Bei einem ausreichend großen Datenfundus kann so eine Verknüpfung zwischen der Art, Anzahl und Größe der gefundenen Fehler und der statistischen Reparaturerfolgswahrscheinlichkeit für einen bestimmten Bauteiltyp oder auch Bauteilübergreifend hergestellt werden. Bei einer weiter bevorzugten Ausgestaltung, kann ein geprüftes Bauteil beim Unterschreiten einer gewissen Reparaturwahrscheinlichkeit bspw. kleiner 60%, bevorzugt kleiner 40%, als vom maschinellen Lernsystem als Ausschuss (Scrap) gewertet werden. Dies hilft dabei, unwirtschaftliche Reparaturversuche zu vermeiden und Ressourcen in der MRO effizienter einzusetzen.

Gemäß einem weiteren Aspekt der Erfindung kann das maschinelle Lernsystem ein neuronales Netzwerk, ein deep neural network (DNN), ein convolutional neural network (CNN) und/oder eine Support Vector Machine umfassen.

Gemäß einem weiteren Aspekt der Erfindung kann das maschinelle Lernsystem dazu ausgebildet sein, Fehlstellen, insbesondere Risse oder Poren, Verunreinigungen, Anbindungsfehler in der zumindest einen Aufnahme zu identifizieren und/oder zu lokalisieren. Die identifizierten Fehlstellen, insbesondere eine Art, Anzahl, Lage und/oder Größe der identifizierten Fehlstellen, können in der Klassifizierung des Bauteils berücksichtigt werden. Bspw. können besonders kritische Lagen von Rissen erkannt werden, bei welchen ein Bauteilversagen besonders wahrscheinlich ist. Dies entspricht eher einem symbolischen Ansatz des maschinellen Lernens, d.h. als "Starthilfe" wird der Lösungsweg an das Vorgehen eines menschlichen Befunders/Prüfers angelehnt, der in einem ersten Schritt Fehlstellen in der Aufnahme von Hand identifiziert und bewertet.

Gemäß einer bevorzugten Ausführungsform kann eine Berücksichtigung der Metadaten bei der Bildauswertung erfolgen. Metadaten bedeuten in diesem Zusammenhang insbesondere Daten, die die Betriebshistorie des Bauteils betreffen. Insbesondere können berücksichtigt werden: Cycles (Lebenszyklen, wie vom Hersteller oder der Zulassungsbehörde definiert) und/oder Daten des Betreibers der Bauteile (z. B.: derated, not derated und/oder, geografische Daten (wo ist das Flugzeug mit den Bauteilen geflogen) und/oder Environmental Data (unter welchen Bedingungen wurde das Bauteil betrieben)

In einer weiteren Ausgestaltung der Erfindung, kann das maschinelle Lernsystem dazu ausgebildet sein, als einen Schritt der Klassifizierung einen Filter über die von der Bilderfassungseinrichtung erhaltene Aufnahme zu legen. Dies ist ein weiterer Schritt in Richtung eines symbolischen Ansatzes, um schneller zu einer konvergierenden Lösung zu gelangen. Für menschliche Prüfer/Befunder werden manche Fehler z.B. bei Veränderung der Graustufengradienten klarer. Das maschinelle Lernsystem blickt zunächst in der Regel auf den gesamten, ungefilterten Datensatz der Aufnahme, die von der Bilderfassungseinrichtung kommt. Wenn beim Trainieren des maschinellen Lernsystems dieses die manuelle Markierung der Fehlstelle in der Aufnahme zusammen mit der vom Prüfer/Befunder gewählten Filtereinstellung, bei der dieser die Fehlstelle erkannt hat, erhält, kann das maschinelle Lernsystem die Daten ebenfalls zur Vereinfachung der Mustererkennung mit diesem Filter filtern und gegebenenfalls schneller zu einer Lösung konvergieren. Bevorzugt kann das maschinelle Lernsystem zu einer automatisierten Definition von Regions of Interest/ Bereichen mit hoher Auftretenswahrscheinlichkeit von Schadensbildern trainiert sein.

Gemäß einem weiteren Aspekt der Erfindung kann das maschinelle Lernsystem dazu ausgebildet sein, die Bilderfassungseinrichtung nach der Auswertung der zumindest einen Aufnahme autonom anzusteuern, um zumindest eine weitere Aufnahme des Bauteils mit einem variierten Aufnahmeparameter, insbesondere einem variierten Aufnahmewinkel, zu erstellen, wenn anhand der zumindest einen anfänglichen Aufnahme ein Klassifizierungskriterium nicht erfüllt werden kann.

Die Aufgabe wird außerdem gelöst durch erfindungsgemäßes Verfahren zum Trainieren eines maschinellen Lernsystems, dass zum Prüfen eines Bauteils, insbesondere eines Bauteils einer Strömungsmaschine, ausgebildet und vorgesehen ist gemäß Anspruch 8. Dabei wird in einem ersten Schritt ein maschinelles Lernsystems bereitgestellt, das insbesondere ein neuronales Netzwerk umfasst.

Dem maschinellen Lernsystem werden eine Aufnahme des Bauteils sowie Metadaten zu dem Bauteil eingegeben, wobei die Metadaten insbesondere einen Bauteiltyp, eine Laufzeit des Bauteils, eine Anzahl verbleibender Lebenszyklen und/oder eine Reparaturhistorie umfassen.

In einem weiteren Schritt klassifiziert das maschinelle Lernsystem das Bauteils anhand der eingegebenen Daten in eine "Servicable" oder eine "Non-Servicable"Kategorie und gibt die ermittelten Kategorie anschließend aus, bspw. auf einem Bildschirm wieder.

Daraufhin werden zutreffende Informationen über die Kategorie des Bauteils in das maschinelle Lernsystem eingespeist, um dieses zu trainieren. Das heißt, das maschinelle Lernsystem prüft das Bauteil zunächst auf Basis seines aktuellen Trainings- bzw. Wissensstandes und wird anschließend mit einer ausgewählten "Musterlösung" weiter antrainiert. Stimmt diese Musterlösung bzw. zutreffende Information mit der Bewertung des maschinellen Lernsystems überein, kann mit dem nächsten Bauteil fortgefahren werden. Stimmen die Prüfergebnisse nicht überein können die Bewertungskriterien manuell oder automatisch angepasst werden, bspw. durch Methoden des reinforcement learning.

Gemäß einer bevorzugten Ausführungsform kann die oben genannte zutreffende Information zum Trainieren des maschinellen Lernsystems auf der Grundlage einer menschlichen Prüfung des Bauteils erstellt werden.

Gemäß einem weiteren Aspekt der Erfindung kann das maschinelle Lernsystem dazu trainiert sein, bei den als "servicable" klassifizierten Bauteilen eine Lebensdauerprognose abzugeben.

Gemäß einem weiteren bevorzugten Aspekt der Erfindung, kann das maschinelle Lernsystem beim Schritt des Klassifizierens, analog zu den vorstehend beschriebenen Prüfverfahren, zusätzlich ein Klassifizieren in eine "Repairable" oder "Non-Repairable" Kategorie, ein Ermitteln einer eine Erfolgswahrscheinlichkeit einer Reparatur und/oder eine Identifikation von Fehlstellen in der zumindest eine Aufnahme des Bauteils durchführen und beim Eingeben der zutreffenden Information entsprechend eine zutreffende Kategorie oder zutreffend identifizierte Fehlstellen zum Trainieren in das maschinelle Lernsystem eingegeben werden.

Gemäß einer bevorzugten Ausführungsform können Metadaten beim Trainieren des selbstlernenden Algorithmus verwendet werden. Metadaten bedeuten in diesem Zusammenhang insbesondere Daten, die die Betriebshistorie des Bauteils betreffen. Insbesondere können berücksichtigt werden: Cycles (Lebenszyklen, wie vom Hersteller oder der Zulassungsbehörde definiert) und/oder Daten des Betreibers der Bauteile (z. B.: derated, not derated und/oder, geografische Daten (wo ist das Flugzeug mit den Bauteilen geflogen) und/oder Environmental Data (unter welchen Bedingungen wurde das Bauteil betrieben)
Die Aufgabe wird ferner gelöst durch ein Computerprogrammprodukt nach Anspruch 11, das von einem Prozessor eines Computers lesbare Instruktionen aufweist, die, wenn sie von dem Prozessor ausgeführt werden, den Prozessor veranlassen, das Verfahren nach einem der vorhergehenden Aspekte auszuführen.

Die Aufgabe wird ferner gelöst durch ein computerlesbares Speichermedium nach Anspruch 12, auf dem das Computerprogrammprodukt nach dem vorangehenden Aspekt gespeichert ist.

Die Aufgabe wird ferner gelöst durch ein System zum Prüfen eines Bauteils, insbesondere eines Bauteils einer Strömungsmaschine nach Anspruch 13. Ein solches System hat zumindest eine Bilderfassungseinrichtung zum Aufnehmen einer Röntgen- oder CT-Aufnahme des Bauteils und einen trainierten maschinellen Lernsystem das dazu ausgebildet ist, die Aufnahme der Bilderfassungseinrichtung und Metadaten über das Bauteil zu akquirieren/erhalten und das dazu trainiert ist, das Bauteil anhand dieser Daten in eine "Servicable" oder in eine "Non-Servicable" Kategorie zu klassifizieren. Ferner kann das System dazu trainiert und ausgebildet sein, einen oder mehrere der vorstehend beschriebenen Aspekte eines Prüfverfahres oder Trainingsverfahrens auszuführen.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: eine schematische Darstellung einer Strömungsmaschine;
- Figur 2: eine schematische Darstellung eines Ablaufs eines Verfahrens zum Prüfen eines Bauteils gemäß einem Ausführungsbeispiel der vorliegenden Erfindung;
- Figur 3: eine schematische Darstellung eines Ablaufs eines Trainingsvorgangs für ein maschinelles Lernsystem gemäß einem Ausführungsbeispiel der Erfindung;
- Figur 4: ein System gemäß einem Ausführungsbeispiel der Erfindung.

### Bevorzugte Ausführung der Erfindung

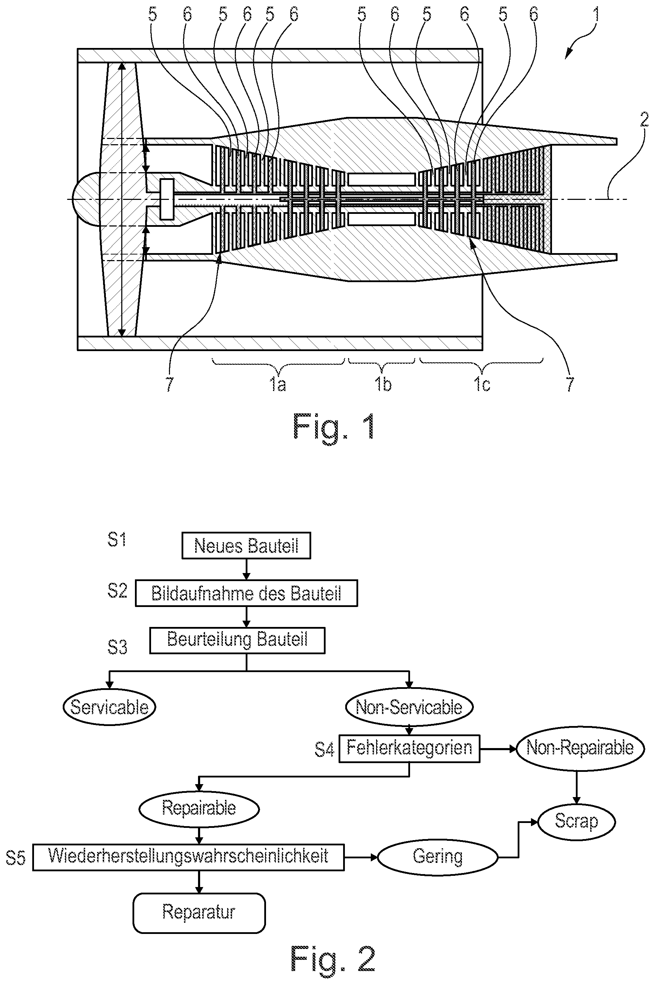

**Figur 1** zeigt eine Strömungsmaschine 1, konkret ein Mantelstromtriebwerk, in einem Axialschnitt. Die Strömungsmaschine 1 gliedert sich funktional in Verdichter 1a, Brennkammer 1b und Turbine 1c. Sowohl der Verdichter 1a als auch die Turbine 1c sind jeweils aus mehreren Stufen aufgebaut. Jede der Stufen setzt sich aus einem Stator 5 und einem Rotor 6 zusammen. Das Bezugszeichen 7 bezeichnet den Gaskanal, also den Verdichtergaskanal im Falle des Verdichters 1a bzw. den Heißgaskanal im Falle der Turbine 1c. Im Verdichtergaskanal wird die angesaugte Luft komprimiert, sie wird dann in der nachgelagerten Brennkammer 1b mit hinzugemischten Kerosin verbrannt. Das Heißgas durchströmt den Heißgaskanal und treibt dabei die Rotoren 6 an, die um die Drehachse 2 rotieren.

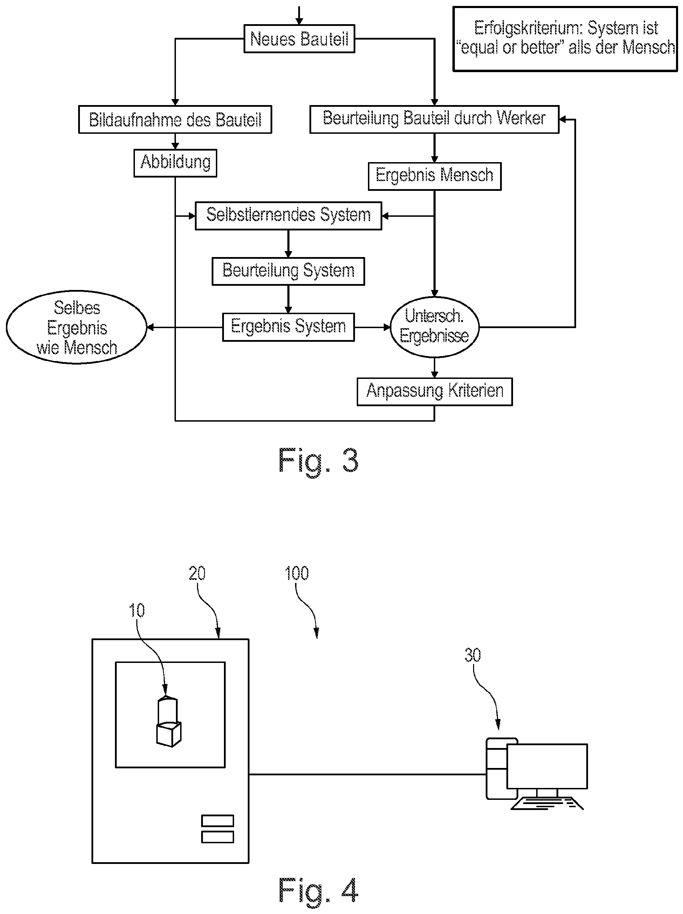

**Figur 2** illustriert in einer schematischen Darstellung ein Verfahren zum Prüfen eines Bauteils 10, insbesondere eines Bauteils 10 einer Strömungsmaschine, vorzugsweise eines Bauteils 10 eines Triebwerks. gemäß einer Ausführungsform der vorliegenden Erfindung. In einem ersten Schritt (S1) erreicht ein zu prüfendes Bauteil eine Prüfstation 100 (siehe Fig. 4). Das Bauteil wird in einem nächsten Schritt (S2) in eine Bilderfassungseinrichtung 20 gelegt und es wird zumindest eine Bildaufnahme durchgeführt. Im hier beschriebenen Beispiel wird eine Röntgen- oder CT-Aufnahme des Bauteils in einem vorbestimmten Winkel durchgeführt. Ebenso sind auch Ausführungsformen mit bspw. einer Fotobox denkbar, die unter konstanten Bedingungen Lichtbildaufnahmen erstellt. Der vorbestimmte Winkel kann bspw. so eingestellt sein, dass eine Schnittdarstellung des Bauteils entsteht, die besonders häufig im Betrieb beschädigte Bauteilbereiche hervorhebt.

Im darauffolgenden Verfahrensschritt (S3) wird die zumindest eine von der Bilderfassungseinrichtung 20 erfasste Aufnahme an ein maschinelles Lernsystem 30 übermittelt, welches einen Computer bzw. eine Recheneinrichtung aufweist auf dem zumindest eine Datenbank und ein trainierter selbstlernender Algorithmus hinterlegt sind. Das maschinelle Lernsystem 30 ermittelt zunächst, ob die Aufnahme des Bauteils bzw. das Bauteil 10 mindestens eine Fehlstelle, wie z.B. einen Riss oder mindesens eine Pore aufweist oder nicht. Darüber hinaus kann das maschinelle Lernsystem 30 ein Bild ausgeben bzw. erzeugen, auf dem die erkannten bzw. identifizierten Fehlstellen, insbesondere Risse und/oder Poren, in der Aufnahme des Bauteils 10 gekennzeichnet sind. Diese Kennzeichnungen können z.B. durch farbige Elemente, die der Form der Fehlstelle, des Risses bzw. der Pore entsprechen, Beschriftungen oder ähnliches umfassen und dem Prüfer/Befunder zur Orientierung dienen, um Fehlstellen am tatsächlichen Bauteil zu kennzeichnen. Wenn das maschinelle Lernsystem 30 keine Fehlstelle bzw. keinen Riss und/oder keine Pore in dem Gesamtbild erkannt hat, kann das Bauteil 10 als fehlerfrei gekennzeichnet werden.

Der Algorithmus ist im Beschriebenen Ausführungsbeispiel dazu trainiert, das Bauteil 10 entweder in eine "Servicable" oder in eine "Non-Servicable" Kategorie zu klassifizieren. "Servicable" bedeutet dabei, dass das Bauteil vorschriftenkonform in Betrieb genommen werden könnte. Dies bedeutet, dass das Bauteil entweder für fehlerfrei befunden wurde oder die vom maschinellen Lernsystem 30 ermittelten Fehlstellen derart geringfügig sind, dass selbst mit hohem einbezogenen Sicherheitsfaktor keine Auswirkungen auf das Bauteil 10 im Betrieb zu erwarten sind. Um die Klassifizierung durchzuführen, greift der trainierte selbstlernende Algorithmus auf in der Datenbank hinterlegte Metadaten zum Bauteil 10 zurück, welche u.a. die Laufzeit, die verbleibenden Lebenszyklen (vor der Reparatur), den Operator (z.B. Fluggesellschaft), nominelle oder gemessene Wandstärken, eine Reparaturhistorie oder eine Historie der Umgebung, in welcher das Bauteil betrieben wurde, umfassen.

Der Schritt (S4) wird nur durchgeführt, wenn das Bauteil 10 im Schritt (S3) als "Non-Servicable" klassifiziert wurde. In diesem Fall stellt das maschinelle Lernsystem eine weitere Klassifizierung des Bauteils an: entweder in eine "Repairable" oder in eine "Non-Repairable" Kategorie. Sollte das Bauteil in die "Repairable"-Kategorie eingestuft werden, erstellt das maschinelle Lernsystem in einem Schritt (S5) eine Prognose über die Erfolgswahrscheinlichkeit der Reparatur an. Für diese Prognose kann das maschinelle Lernsystem 30 auf eine Datenbank zurückgreifen, in welcher sowohl vorangegangene Prüfverfahren/-ergebnisse an Bauteilen desselben Typs (erstellte Aufnahmen, Metadaten und Prüfergebnis) als auch die letztendlichen Ergebnisse der Reparaturen dieser Bauteile hinterlegt sind. In anderen Worten sind in der Datenbank für Bauteile desselben Typs in der Vergangenheit erstellte Bild- und Metadaten, die anhand dieser Daten erstellten Prognosen sowie der letztendliche Reparaturerfolg oder -misserfolg verknüpft, um als Datenbasis für eine Prognose eines aktuell geprüften Teils zu dienen. Beispielhaft könnte, wenn an einem aktuell untersuchten Bauteil ein Riss mit einer bestimmten Länge ermittelt wurde, in der Datenbank geprüft werden, wie hoch in der Vergangenheit die Erfolgswahrscheinlichkeit einer Reparatur desselben Bauteiltyps mit einem Riss vergleichbarer Länge (bspw. +/- 10%) lag.

Ist Schritt S5 durchlaufen, wird das Bauteil 10 mit der erstellten Prognose über die Wiederherstellungswahrscheinlichkeit und den Ermittelten Fehlerpositionen, -typen und Fortschrittsgrößen an die nächste Station zum ersten Reparaturschritt weitergeleitet.

Für die vorstehend beschriebene Klassifizierung sowie für die Abschätzung der Erfolgswahrscheinlichkeit einer Reparatur können insbesondere die Länge der Fehlstelle bzw. der Fehlstellen, insbesondere des Risses oder der Risse bzw. der Pore bzw. Poren, die Breite der Fehlstelle oder der Fehlstellen, insbesondere des Risses oder der Risse, die Größe bzw. Durchmesser der Fehlstelle bzw. Pore und/oder Anzahl der Fehlstellen, insbesondere Risse und/oder Poren, als Klassifikationseigenschaft zugrunde gelegt werden.

**Figur 3** Das maschinelle Lernsystem 30 weist, wie bereits erwähnt, einen trainierten selbstlernenden Algorithmus auf. Dabei kann es sich insbesondere um eine support vector machine (SVM), ein neuronales Netzwerk, ein Deep Neural Network (DNN), ein Convolutional Neural Network (CNN) oder ähnliches handeln. Dieses wird, wie in Figur 3 dargestellt, zum Prüfen von Bauteilen folgendermaßen trainiert:
Als Ausgangsbasis für das Training des maschinellen Lernsystems 30 ist denkbar, dass Bilder, die vom Menschen zutreffend als Fehlstellen, insbesondere Risse und/oder Poren, "aufweisend" (auch als "eine Anzeige haben" bezeichnet) oder "nicht aufweisend" (auch als "keine Anzeige haben" bezeichnet) markiert wurden, in das maschinelle Lernsystem 30 als Truth/Wahrheit eingegeben werden. Vorstellbar ist auch, dass zusätzlich das Bild, bei dem ein Mensch die Stellen bzw. Positionen der Fehlstellen, insbesondere Risse und/oder Poren, zutreffend markiert hat, als Truth/Wahrheit in das maschinelle Lernsystem 30 eingegeben wird. Diese Bilder werden im Kontext mit den jeweiligen bereits erwähnten Metadaten (Laufzeit, LLP etc.) in das maschinelle Lernsystem 30 eingegeben. Zusammengefasst kann ein vom Menschen vorbewerteter Datensatz als Ausgangsbasis für das Anlernen des maschinellen Lernsystems 30 dienen.

Danach kann das maschinelle Lernsystem 30 sozusagen in situ weiter trainiert und seine Fehlererfassung geschärft werden. Ein Bild bzw. eine Bildaufnahme des Bauteils 10, das von der Bildererfassungseinrichtung 20 erstellt wurde, wird dazu in das maschinelle Lernsystem 30 eingegeben. Das Bauteil 10 wurde bei der Bildaufnahme mit Röntgenstrahlen durchleuchtet, sodass eine Graustufendarstellung entsteht, bei der auch unterhalb der Oberfläche des Bauteils 10 liegende Fehlstellen bzw. Unregelmäßigkeiten im Signal enthalten sind. Das maschinelle Lernsystem 30 gibt auf Basis der von der Bilderfassungseinrichtung 20 aufgenommenen Aufnahme, der in der Datenbank zu dem Bauteil 10 hinterlegten Metadaten sowie der Lernhistorie die Information aus, ob das Bauteil 10 Fehlstellen, insbesondere Risse oder Poren, aufweist oder nicht und gibt ein Bild aus, auf dem die Fehlstellen, insbesondere Risse und/oder Poren, die es erkannt hat, gekennzeichnet sind. Zudem klassifiziert das maschinelle Lernsystem 30 nach der in Figur 2 beschriebenen Vorgehensweise das Bauteil 10 anhand der oben genannten Daten als Servicable/Non-Servicable sowie Reairable/Non-Repairable.

Ein Trainer, z.B. ein menschlicher Befunder, prüft parallel oder nachfolgen die Aufnahme des Bauteils (sowie ggf. auch das physische Bauteil an sich) und berichtigt bzw. gibt zutreffend an, ob das jeweilige Bauteil 10 Fehlstellen, insbesondere Risse und/oder Poren, enthält oder nicht. Dies wird in das maschinelle Lernsystem 30 eingegeben, so dass das maschinelle Lernsystem 30 lernen kann. Dabei ist es z.B. auch möglich, dass der menschliche Befunder/Trainer manuell eine Fehlstelle, wie z.B. einen Riss markiert, um den Algorithmus zu trainieren. Der Trainer gibt zusätzlich seine Klassifikation des Bauteils 10 in die Kategorien Servicable/Non-Servicable sowie Repairable/Non-Repairable als Referenz an.

Das maschinelle Lernsystem 30 erkennt selbständig die Unterschiede zwischen dem von ihm erzeugten Bild, auf dem die vom maschinellen Lernsystem 30 erkannten Fehlstellen, insbesondere Risse und/oder Poren, gekennzeichnet sind, und dem Bild, auf dem die von dem Menschen zutreffend erkannten Fehlstellen, insbesondere Risse und/oder Poren, gekennzeichnet sind. Ebenso erkennt das maschinelle Lernsystem selbstständig Abweichungen in seiner Klassifizierung des Bauteils zur menschlichen Klassifizierung. Hat das maschinelle Lernsystem 30 eine Fehlstelle nicht erkannt oder einen schadfreien Bereich unzutreffend als Fehlstelle gekennzeichnet, so lernt es anhand des menschlichen Befundes und kann seine Bewertungskriterien neu gewichten.

Stimmt die maschinelle Klassifizierung und Fehlererkennung mit der Klassifizierung und Fehlererkennung des Trainers überein, wird das maschinelle Lernsystem 30 am nächsten Bauteil weitertrainiert. Gibt es eine Abweichung, vergleicht der Trainer die Ergebnisse und kann manuell die Kriterien anpassen. Alternativ kann das maschinelle Lernsystem seine Bewertungskriterien auch automatisch auf Basis der Humanbewertung anpassen. Die Aufnahme wird dann mit den angepassten Kriterien erneut vom maschinellen Lernsystem 30 bewertet. Dies wird solange wiederholt, bis die maschinelle mit der menschlichen Bewertung übereinstimmt.

Dieses Training des maschinellen Lernsystems 30 kann mit einer Vielzahl von Bildern, möglichst von unterschiedlichen Bauteilen 10 desselben Typs, wiederholt werden.

Das maschinelle Lernsystem 30 kann von unterschiedlichen Personen trainiert werden. Dies bedeutet, dass unterschiedliche Menschen Fehlstellen, insbesondere Risse und/oder Poren, in dem Gesamtbild identifizieren und diese Information in das maschinelle Lernsystem 30 eingegeben wird.

Wenn das maschinelle Lernsystem 30 soweit trainiert wurde, dass es die Fehlstellensuche und die Klassifizierung des Bauteils so gut wie ein (hierfür geschulter bzw. trainierter) Mensch durchführt kann das Training ggf. beendet werden und es muss vom Menschen nur noch den Betrieb des Systems 10 mit dem maschinellen Lernsystem 40 überwacht bzw. bedient werden.

Das Bauteil 10 kann z.B. ein Bauteil eines Triebwerks sein. Das Bauteil 10 kann z.B. ein Rotor bzw. eine Schaufel eines Hochdruckkompressors (high pressure compressor, HPC) oder ein Rotor bzw. eine Schaufel einer Hochdruckturbine (high pressure turbine, HPT) eines Triebwerks sein. Das Triebwerk kann insbesondere ein Triebwerk eines Flugzeugs sein.

### BEZUGSZEICHENLISTE

- 1: Strömungsmaschine
- 1a: Verdichter
- 1b: Brennkammer
- 1c: Turbine
- 2: Drehachse
- 5: Rotor
- 6: Stator
- 7: Gaskanal
- 10: Bauteil
- 20: Bilderfassungseinrichtung
- 30: maschinelles Lernsystem
- 100: Prüfstation

## Patentansprüche

1. Verfahren zum Prüfen eines Bauteils (10) einer Strömungsmaschine (1), mit den Schritten:
- Erstellen (S2) zumindest einer Aufnahme, insbesondere einer Lichtbild, Röntgen- oder CT-Aufnahme, des Bauteils (10) mittels einer Bilderfassungseinrichtung (20);
- Bereitstellen (S21) von Metadaten zu dem Bauteil (10) aus einer Datenbank, die zumindest
eine berechnete und/oder vorgeschriebene Restlebensdauer des Bauteils (10) und/oder
nominelle und/oder gemessene Wandstärken des Bauteils (10) umfassen;
- Klassifizieren des Bauteils (10) anhand der von der Bilderfassungseinrichtung (20) erstellten Aufnahme und der bereitgestellten Metadaten in eine "Serviceable", also "noch betriebsfähig", oder eine "Non-Serviceable", also "nicht mehr betriebsfähig", Kategorie mittels eines trainierten maschinellen Lernsystems (30), das auf einem Computer läuft.

2. Verfahren nach Anspruch 1, bei welchem das maschinelle Lernsystem (30) die als "Non-Serviceable" klassifizierten Teile entweder einer "Repairable" oder einer "Non-Repairable" Kategorie zuordnet.

3. Verfahren nach Anspruch 2, bei welchem das maschinelle Lernsystem (30) den als "Repairable" klassifizierten Bauteilen eine Erfolgswahrscheinlichkeit der Reparatur zuordnet.

4. Verfahren nach einem der vorangehenden Ansprüche, bei welchem das maschinelle Lernsystem (30) ein neuronales Netzwerk, ein deep neural network (DNN), ein convolutional neural network (CNN) und/oder eine Support Vector Machine umfasst.

5. Verfahren nach einem der vorstehenden Ansprüche, bei welchem das maschinelle Lernsystem (30) dazu ausgebildet ist, Fehlstellen, insbesondere Risse oder Poren, in der zumindest einen Aufnahme zu identifizieren und/oder zu lokalisieren und die identifizierten/lokalisierten Fehlstellen, insbesondere eine Art, Lage, Anzahl und/oder Größer der identifizierten Fehlstellen, in der Klassifizierung des Bauteils zu berücksichtigen.

6. Verfahren nach einem der vorstehenden Ansprüche, bei dem als Metadaten zusätzlich Daten des Betreibers der Bauteile und/oder geografische Daten und/oder Environmental Data verwendet werden.

7. Verfahren nach einem der vorstehenden Ansprüche, bei welchem das maschinelle Lernsystem (30) dazu ausgebildet ist, die Bilderfassungseinrichtung nach der Auswertung der zumindest einen Aufnahme autonom anzusteuern, um zumindest eine weitere Aufnahme des Bauteils mit einem variierten Aufnahmeparameter, insbesondere einem variierten Aufnahmewinkel, zu erstellen, wenn anhand der zumindest einen anfänglichen Aufnahme ein Klassifizierungskriterium nicht erfüllt werden kann.

8. Verfahren zum Trainieren eines maschinellen Lernsystems (30) zum Prüfen eines Bauteils (10) einer Strömungsmaschine, wobei das Verfahren folgende Schritte umfasst:
Bereitstellen eines maschinellen Lernsystems (30), insbesondere umfassend ein neuronales Netzwerk;
Eingeben einer Aufnahme des Bauteils (10) in das maschinelle Lernsystem (30),
Eingeben von Metadaten zu dem Bauteil (10) in das maschinelle Lernsystem (30), die zumindest
· eine berechnete und/oder vorgeschriebene Restlebensdauer des Bauteils (10) und/oder
· nominelle und/oder gemessene Wandstärken des Bauteils (10) umfassen
Klassifizieren des Bauteils anhand der eingegebenen Daten in eine "Serviceable", also "noch betriebsfähig", oder eine "Non-Serviceable",also "nicht mehr betriebsfähig", Kategorie;
Ausgeben der ermittelten Kategorie; und
Eingeben von zutreffender Information über die Kategorie des Bauteils (10) in das maschinelle Lernsystem (30) zum Trainieren des maschinellen Lernsystems (30).

9. Verfahren nach Anspruch 8, wobei
die zutreffende Information auf Grundlage einer menschlichen Prüfung des Bauteils (10) erstellt wird.

10. Verfahren nach Anspruch 8 oder 9, wobei das maschinelle Lernsystem (30) beim Schritt des Klassifizierens zusätzlich ein Klassifizieren in eine "Repairable" oder "Non-Repairable" Kategorie, ein Ermitteln einer eine Erfolgswahrscheinlichkeit einer Reparatur und/oder eine Identifikation von Fehlstellen in der zumindest einen Aufnahme des Bauteils (10) durchführt und beim Eingeben der zutreffenden Information entsprechend eine zutreffende Kategorie oder zutreffend identifizierte Fehlstellen zum Trainieren in das maschinelle Lernsystem (30) eingegeben werden.

11. Computerprogrammprodukt, das von einem Prozessor eines Computers lesbare Instruktionen aufweist, die, wenn sie von dem Prozessor ausgeführt werden, den Prozessor veranlassen, das Klassifizieren des Bauteils (10) gemäß einem Verfahren nach einem der Ansprüche 1 bis 7 auszuführen.

12. Computerlesbares Medium, auf dem das Computerprogrammprodukt nach Anspruch 11 gespeichert ist.

13. System (100) zum Prüfen eines Bauteils (10) einer Strömungsmaschine, wobei das System folgendes umfasst:
eine Bilderfassungseinrichtung (20), insbesondere eine Foto-, Röntgen- oder CT-Bilderfassungseinrichtung, zum Aufnehmen einer Aufnahme des Bauteils (10); und
ein trainiertes maschinelles Lernsystem (40) das dazu ausgebildet ist, die Aufnahme der Bilderfassungseinrichtung (20) und Metadaten über das Bauteil (10) aus einer Datenbank zu erhalten, die zumindest
· eine berechnete und/oder vorgeschriebene Restlebensdauer des Bauteils (10) und/oder
· nominelle und/oder gemessene Wandstärken des Bauteils (10)
umfassen, wobei das trainierte maschinelle Lernsystem (40) dazu trainiert ist, das Bauteil (10) anhand dieser Daten in eine "Serviceable", also "noch betriebsfähig", oder in eine "Non-Serviceable",also "nicht mehr betriebsfähig", Kategorie zu klassifizieren.

## Claims

1. Method for inspecting a component (10) of a turbomachine (1), comprising the steps of:
- generating (S2) at least one image, in particular a photograph, X-ray or CT image, of the component (10) by means of an image acquisition device (20);
- providing (S21) metadata about the component (10) from a database, which metadata include at least
• a calculated and/or specified residual service life of the component (10) and/or
• nominal and/or measured wall thicknesses of the component (10);
- classifying the component (10), based on the image generated by the image acquisition device (20) and the metadata provided, into a "Serviceable," i.e., "still operational," or "Non-Serviceable," i.e., "no longer operational," category by means of a trained machine learning system (30) running on a computer.

2. Method according to claim 1, wherein the machine learning system (30) assigns the parts classified as "Non-Serviceable" to either a "Repairable" or a "Non-Repairable" category.

3. Method according to claim 2, wherein the machine learning system (30) assigns a repair success probability to the components classified as "Repairable".

4. Method according to any of the preceding claims, wherein the machine learning system (30) comprises a neural network, a deep neural network (DNN), a convolutional neural network (CNN) and/or a support vector machine.

5. Method according to any of the preceding claims, wherein the machine learning system (30) is designed to identify and/or locate defects, in particular cracks or pores, in the at least one image and to take into account the identified/located defects, in particular a type, position, number and/or size of the identified defects, in the classification of the component.

6. Method according to any of the preceding claims, wherein additional data from the operator of the components and/or geographical data and/or environmental data are used as metadata.

7. Method according to any of the preceding claims, wherein the machine learning system (30) is designed to autonomously actuate the image acquisition device after evaluating the at least one image, in order to generate at least one further image of the component using a varied image parameter, in particular a varied image angle if a classification criterion cannot be met based on the at least one initial image.

8. Method for training a machine learning system (30) to inspect a component (10) of a turbomachine, wherein the method comprises the following steps:
providing a machine learning system (30), in particular comprising a neural network;
inputting an image of the component (10) into the machine learning system (30),
inputting metadata about the component (10) into the machine learning system (30), which metadata include at least
• a calculated and/or specified residual service life of the component (10) and/or
• nominal and/or measured wall thicknesses of the component (10);
classifying the component, based on the inputted data, into a "Serviceable", i.e., "still operational," or a "Non-Serviceable", i.e., "no longer operational," category;
outputting the ascertained category; and
inputting applicable information about the category of the component (10) into the machine learning system (30) to train the machine learning system (30).

9. Method according to claim 8, wherein
the applicable information is generated based on a human inspection of the component (10).

10. Method according to claim 8 or claim 9, wherein, in the classification step, the machine learning system (30) further carries out a classification into a "Repairable" or "Non-Repairable" category, ascertains a repair success probability and/or identifies defects in the at least one image of the component (10) and, when the appropriate information is inputted, an appropriate category or appropriately identified defects are correspondingly input into the machine learning system (30) for training.

11. Computer program product comprising instructions readable by a computer processor, which instructions, when executed by the processor, cause the processor to carry out the classification of the component (10) according to a method according to any of claims 1 to 7.

12. Computer-readable medium on which the computer program product according to claim 11 is stored.

13. System (100) for inspecting a component (10) of a turbomachine, wherein the system comprises the following:
an image acquisition device (20), in particular a photographic, X-ray or CT image acquisition device, for recording an image of the component (10); and
a trained machine learning system (40) which is designed to receive the image from the image acquisition device (20) and to receive metadata about the component (10) from a database, which metadata include at least
• a calculated and/or specified residual service life of the component (10) and/or
• nominal and/or measured wall thicknesses of the component (10),
wherein the trained machine learning system (40) is trained to classify the component (10), based on these data, into a "Serviceable," i.e., "still operational," or "Non-Serviceable," i.e., "no longer operational," category.

## Revendications

1. Procédé de contrôle d'un composant (10) d'une turbomachine (1), comportant les étapes suivantes :
- production (S2) d'au moins une prise de vue, en particulier d'une photo, d'une radiographie ou d'une tomodensitométrie, du composant (10) par le biais d'un dispositif d'acquisition d'images (20) ;
- fourniture (S21) de métadonnées relatives au composant (10) à partir d'une base de données, qui comprennent au moins
• une durée de vie résiduelle calculée et/ou prescrite du composant (10) et/ou
• des épaisseurs de paroi nominales et/ou mesurées du composant (10) ;
- classement du composant (10), à l'aide de la prise de vue produit par le dispositif d'acquisition d'images (20) et des métadonnées fournies, dans une catégorie « utilisable », c'est-à-dire « encore opérationnel », ou dans une catégorie « non utilisable », c'est-à-dire « plus opérationnel », par le biais d'un système d'apprentissage automatique (30) entraîné qui est exécuté sur un ordinateur.

2. Procédé selon la revendication 1, dans lequel le système d'apprentissage automatique (30) affecte les pièces classées comme « non utilisable » soit à une catégorie « réparable » soit à une catégorie « non réparable ».

3. Procédé selon la revendication 2, dans lequel le système d'apprentissage automatique (30) affecte une probabilité de réussite de la réparation aux composants classés comme « réparables ».

4. Procédé selon l'une des revendications précédentes, dans lequel le système d'apprentissage automatique (30) comprend un réseau neuronal, un réseau neuronal profond (DNN), un réseau neuronal convolutionnel (CNN) et/ou une machine vectorielle de support.

5. Procédé selon l'une des revendications précédentes, dans lequel le système d'apprentissage automatique (30) est conçu pour identifier et/ou localiser des défauts, en particulier des fissures ou des pores, dans l'au moins une prise de vue et pour prendre en compte les défauts identifiés/localisés, en particulier un type, une position, un nombre et/ou une taille des défauts identifiés, dans le classement du composant.

6. Procédé selon l'une des revendications précédentes, dans lequel des données de l'exploitant des composants et/ou des données géographiques et/ou des données environnementales sont utilisées en outre comme métadonnées.

7. Procédé selon l'une des revendications précédentes, dans lequel le système d'apprentissage automatique (30) est conçu pour commander de manière autonome le dispositif d'acquisition d'images après l'évaluation de l'au moins une prise de vue, afin de réaliser au moins une autre prise de vue du composant avec un paramètre de prise de vue modifié, en particulier un angle de prise de vue modifié, lorsqu'un critère de classement ne peut pas être satisfait à l'aide de l'au moins une prise de vue initiale.

8. Procédé d'entraînement d'un système d'apprentissage automatique (30) pour contrôler un composant (10) d'une turbomachine, dans lequel le procédé comprend les étapes suivantes :
fourniture d'un système d'apprentissage automatique (30), comprenant en particulier un réseau neuronal ;
saisie d'une prise de vue du composant (10) dans le système d'apprentissage automatique (30),
saisie de métadonnées relatives au composant (10) dans le système d'apprentissage automatique (30), qui comprennent au moins
• une durée de vie résiduelle calculée et/ou prescrite du composant (10) et/ou
• des épaisseurs de paroi nominales et/ou mesurées du composant (10)
classement du composant, à l'aide des données saisies, dans une catégorie « utilisable », c'est-à-dire « encore fonctionnel », ou « non utilisable », c'est-à-dire « plus fonctionnel » ;
délivrance de la catégorie déterminée ; et
saisie d'informations applicables concernant la catégorie du composant (10) dans le système d'apprentissage automatique (30) pour entraîner le système d'apprentissage automatique (30).

9. Procédé selon la revendication 8, dans lequel
les informations applicables sont produites sur la base d'un contrôle humain du composant (10).

10. Procédé selon la revendication 8 ou 9, dans lequel, lors de l'étape de classement, le système d'apprentissage automatique (30) effectue en outre un classement dans une catégorie « réparable » ou « non réparable », une détermination d'une probabilité de réussite d'une réparation et/ou une identification de défauts dans l'au moins une prise de vue du composant (10) et, lors de la saisie des informations applicables, une catégorie applicable ou des défauts identifiés de manière applicable sont saisis en correspondance dans le système d'apprentissage automatique (30) pour l'entraînement.

11. Produit-programme d'ordinateur qui présente des instructions lisibles par un processeur d'un ordinateur qui, lorsqu'elles sont exécutées par le processeur, amènent le processeur à exécuter le classement du composant (10) selon un procédé selon l'une des revendications 1 à 7.

12. Support lisible par ordinateur sur lequel est stocké le produit-programme d'ordinateur selon la revendication 11.

13. Système (100) pour contrôler un composant (10) d'une turbomachine, dans lequel le système comprend les éléments suivants :
un dispositif d'acquisition d'images (20), en particulier un dispositif d'acquisition d'images photographiques, radiographiques ou de tomodensitométrie, pour prendre une prise de vue du composant (10) ; et
un système d'apprentissage automatique (40) entraîné qui est conçu pour obtenir la prise de vue du dispositif d'acquisition d'images (20) et des métadonnées relatives au composant (10) à partir d'une base de données qui comprennent au moins
• une durée de vie résiduelle calculée et/ou prescrite du composant (10) et/ou
• des épaisseurs de paroi nominales et/ou mesurées du composant (10), dans lequel le système d'apprentissage automatique (40) entraîné est entraîné à classer le composant (10), à l'aide de ces données, dans une catégorie « utilisable », c'est-à-dire « encore fonctionnel », ou dans une catégorie « non utilisable », c'est-à-dire « plus fonctionnel ».
